# FASCICULE DE BREVET EUROPEEN

(11) **EP 4 311 778 B1**
(45) Date de publication et mention de la délivrance du brevet: **14.05.2025**
(21) Numéro de dépôt: 23186889.4
(22) Date de dépôt: 21.07.2023
(51) Int. Cl.: B64D 37/30, B64D 37/32, B64D 37/34, F02M 21/06, F17C 7/04, F02M 21/02

(54) **SYSTÈME D'ALIMENTATION EN DIHYDROGÈNE POUR UN MOTEUR D'AÉRONEF**
SYSTEM ZUR VERSORGUNG EINES FLUGZEUGMOTORS MIT DIWASSERSTOFF
DIHYDROGEN SUPPLY SYSTEM FOR AN AIRCRAFT ENGINE

(30) Priorité: 25.07.2022 FR 2207594
(43) Date de publication de la demande: 31.01.2024
(73) Titulaire: AIRBUS OPERATIONS, 31060 Toulouse Cedex 9 (FR)
(72) Inventeur: MARTIN, Pierre-Olivier, 31060 TOULOUSE (FR); CZAPLA, Lionel, 31060 TOULOUSE (FR); BELLEVILLE, Mathieu, 31060 TOULOUSE (FR)
(74) Mandataire: Cabinet Le Guen Maillet

(56) Documents cités:
- WO-A1-2020/188194
- WO-A1-2022/106053
- FR-A1- 3 114 355
- US-A1- 2014 174 083

## Description

### DOMAINE TECHNIQUE

La présente invention concerne un ensemble d'alimentation en dihydrogène pour un moteur d'aéronef, ainsi qu'un aéronef comportant un tel ensemble d'alimentation.

### ÉTAT DE LA TECHNIQUE ANTÉRIEURE

Afin de réduire les émissions de dioxyde de carbone (CO₂) des moteurs d'aéronef, il est connu d'utiliser le dihydrogène comme carburant. L'aéronef comporte alors un système principal d'alimentation qui comporte des réservoirs de dihydrogène liquide. Pour être utilisé par les moteurs, le dihydrogène doit être sous forme gazeuse et pour cela, le système principal d'alimentation comporte des réchauffeurs qui assurent le réchauffage du dihydrogène. Pour amener le dihydrogène du réservoir au moteur, le système principal d'alimentation comporte un réseau de canalisation, de pompes et de vannes qui va des réservoirs aux moteurs en passant par les réchauffeurs.

L'alimentation en dihydrogène doit être assurée même si un incident intervient sur l'un des éléments du système principal d'alimentation. Pour cela, il est connu de mettre en place un système redondant d'alimentation qui prend la main en cas de problème sur le système principal d'alimentation.

Bien qu'un tel arrangement soit performant du point de vue du fonctionnement, il génère du poids supplémentaire et de la complexité du fait de la duplication du système d'alimentation. Il est donc nécessaire de trouver un arrangement différent qui permet d'assurer l'alimentation en dihydrogène des moteurs même en cas d'incident tout en limitant le poids pour l'aéronef.

Le document WO 2022/106053 A1 décrit un procédé de transport d'un cryogène d'une cuve de stockage à une charge, comprenant les étapes suivantes : a) introduire le cryogène de la cuve de stockage dans un réservoir de conditionnement, le cryogène s'écoulant de la cuve de stockage dans le réservoir de conditionnement uniquement à cause de la pression hydrostatique du cryogène, b) amener le cryogène dans le réservoir de conditionnement à son état supercritique, et c) refouler le cryogène du réservoir de conditionnement à la charge, le cryogène dans le réservoir de conditionnement étant maintenu à l'état supercritique lors de l'étape c).

### EXPOSE DE L'INVENTION

Un objet de la présente invention est de proposer un système d'alimentation pour un moteur d'un aéronef où ledit système d'alimentation permet d'assurer l'alimentation en dihydrogène du moteur depuis un réservoir même en cas d'incident sur l'un des éléments dudit système d'alimentation.

À cet effet, est proposé un système d'alimentation pour un aéronef comportant un premier et un deuxième réservoirs de dihydrogène et un moteur, ledit système d'alimentation comportant
- un module d'alimentation comportant une première canalisation de sortie, une deuxième canalisation de sortie, pour chaque réservoir, une canalisation d'apport destinée à être fluidiquement connectée audit réservoir et des moyens arrangés pour canaliser le dihydrogène des canalisations d'apport vers alternativement la première canalisation de sortie ou la deuxième canalisation de sortie et, lorsque le dihydrogène est canalisé vers la première canalisation de sortie, pour canaliser le dihydrogène provenant de la deuxième canalisation de sortie vers la première canalisation de sortie,
- un premier réchauffeur,
- un deuxième réchauffeur,
- une canalisation principale traversant le premier réchauffeur et le deuxième réchauffeur et fluidiquement connectée entre la première canalisation de sortie et le moteur, le long de laquelle sont installées, d'une part, entre le premier réchauffeur et le deuxième réchauffeur, une première électrovanne à trois voies et une deuxième électrovanne à trois voies avec un clapet anti-retour disposé entre la première électrovanne et le deuxième réchauffeur, et, d'autre part, entre le deuxième réchauffeur et le moteur, une troisième électrovanne à trois voies et une quatrième électrovanne à trois voies avec un clapet anti-retour disposé entre la troisième électrovanne et le moteur, où la deuxième électrovanne autorise l'écoulement du premier réchauffeur vers le deuxième réchauffeur mais empêche l'écoulement depuis la deuxième électrovanne vers le premier réchauffeur, où la quatrième électrovanne autorise l'écoulement du deuxième réchauffeur vers le moteur mais empêche l'écoulement de la quatrième électrovanne vers le deuxième réchauffeur,
- une première canalisation de déviation fluidiquement connectée entre la deuxième canalisation de sortie et une voie de la deuxième électrovanne,
- une deuxième canalisation de déviation fluidiquement connectée entre une voie de la première électrovanne et une voie de la quatrième électrovanne,
- des moyens de détection prévus pour détecter une fuite d'hydrogène sur chaque canalisation et chaque réchauffeur, pour détecter un défaut de fonctionnement d'un réchauffeur ou d'une électrovanne et pour délivrer des informations représentatives d'une fuite d'hydrogène ou d'un défaut de fonctionnement détecté, et
- une unité de contrôle arrangée pour commander en ouverture et en fermeture chaque électrovanne et les moyens du module d'alimentation en fonction des informations délivrées par les moyens de détection.

Un tel système d'alimentation assure l'alimentation en dihydrogène du moteur depuis un réservoir même en cas d'incident sur l'un des éléments dudit système d'alimentation

Avantageusement, le système d'alimentation comporte, pour chaque canalisation de déviation, une électrovanne de régulation à deux voies qui est montée sur ladite canalisation de déviation et qui est commandée par l'unité de contrôle.

Avantageusement, le système d'alimentation comporte une canalisation de sécurité qui est fluidiquement connectée entre une voie de la troisième électrovanne et le moteur.

Selon un mode de réalisation particulier, chaque canalisation d'apport est équipée d'une pompe, et le module d'alimentation comporte :
- une canalisation amont fluidiquement connectée entre les canalisations d'apport,
- une canalisation aval fluidiquement connectée entre la première canalisation de sortie et la deuxième canalisation de sortie,
- une première canalisation de liaison et une deuxième canalisation de liaison fluidiquement connectées en parallèle entre la canalisation amont et la canalisation aval, où la première canalisation de liaison est équipée d'une pompe, où la deuxième canalisation de liaison est équipée d'une électrovanne de régulation à deux voies,
- une cinquième électrovanne à deux voies montée sur la canalisation amont entre la pompe de la canalisation d'apport du deuxième réservoir et la première canalisation de liaison,
- une sixième électrovanne à deux voies montée sur la canalisation amont entre la première canalisation de liaison et la deuxième canalisation de liaison,
- une septième électrovanne à deux voies montée sur la canalisation amont entre la pompe de la canalisation d'apport du premier réservoir et la deuxième canalisation de liaison,
- une huitième électrovanne à deux voies montée sur la canalisation aval entre la deuxième canalisation de sortie et la première canalisation de liaison,
- une neuvième électrovanne à deux voies montée sur la canalisation aval entre la première canalisation de liaison et la deuxième canalisation de liaison, et
- une dixième électrovanne à deux voies montée sur la canalisation aval entre la première canalisation de sortie et la deuxième canalisation de liaison.

Selon un autre mode de réalisation particulier, chaque canalisation d'apport est équipée d'une pompe, et le module d'alimentation comporte :
- une canalisation amont fluidiquement connectée entre les canalisations d'apport,
- une canalisation aval fluidiquement connectée entre la première canalisation de sortie et la deuxième canalisation de sortie,
- une première canalisation de liaison et une deuxième canalisation de liaison fluidiquement connectées en parallèle entre la canalisation amont et la canalisation aval, où la première canalisation de liaison est équipée d'une pompe, où la deuxième canalisation de liaison est équipée d'une électrovanne de régulation à deux voies,

- une cinquième électrovanne à trois voies avec une voie fluidiquement connectée à la canalisation d'apport du deuxième réservoir, une voie fluidiquement connectée à la canalisation amont et une voie fluidiquement connectée à la première canalisation de liaison,
- une sixième électrovanne à trois voies avec une voie fluidiquement connectée à la canalisation d'apport du premier réservoir, une voie fluidiquement connectée à la canalisation amont et une voie fluidiquement connectée à la deuxième canalisation de liaison,
- une septième électrovanne à trois voies avec une voie fluidiquement connectée à la deuxième canalisation de sortie, une voie fluidiquement connectée à la canalisation aval et une voie fluidiquement connectée à la première canalisation de liaison, et
- une huitième électrovanne à trois voies avec une voie fluidiquement connectée à la première canalisation de sortie, une voie fluidiquement connectée à la canalisation aval et une voie fluidiquement connectée à la deuxième canalisation de liaison.

Avantageusement, le système d'alimentation comporte au moins un caisson étanche agencé autour d'un des premier ou deuxième réchauffeurs, ledit caisson étant traversé par la canalisation principale.

Avantageusement, la canalisation principale est une canalisation à double peau, comprenant une peau intérieure entourée d'une peau extérieure, et les moyens de détection comportent un détecteur de dihydrogène disposé entre les peaux intérieure et extérieure de la canalisation principale.

Avantageusement, les moyens de détection comportent un détecteur de dihydrogène disposé dans le caisson.

Avantageusement, le caisson est rempli d'un gaz inerte ou mis sous vide.

L'invention propose également un aéronef comportant un premier et un deuxième réservoirs de dihydrogène, au moins un moteur et, pour chaque moteur, un système d'alimentation selon l'une des variantes précédentes, où chaque canalisation d'apport est fluidiquement connectée à un des premier ou deuxième réservoirs, et où la canalisation principale est fluidiquement connectée au moteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de dessus d'un aéronef selon l'invention,
la Fig. 2 est une représentation schématique d'un système d'alimentation selon un premier mode de réalisation de l'invention,
la Fig. 3 est une représentation schématique d'un système d'alimentation selon un deuxième mode de réalisation de l'invention, et
la Fig. 4 est une représentation schématique d'un module du système d'alimentation selon l'invention.

### EXPOSÉ DÉTAILLÉ DE MODES DE RÉALISATION

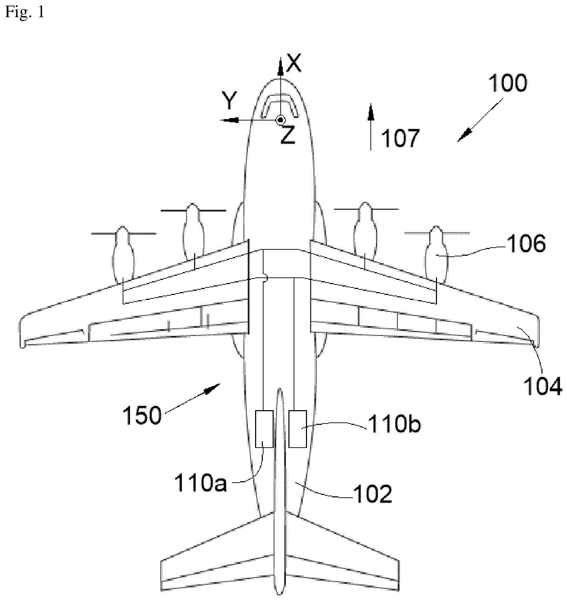

Dans la description qui suit, les termes relatifs à une position sont pris en référence à un aéronef en position normale de vol, c'est-à-dire comme il est représenté sur la Fig. 1.

Dans la description qui suit, et par convention, on appelle X la direction longitudinale de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

La Fig. 1 montre un aéronef 100 qui comporte un fuselage 102 de chaque côté duquel est fixée une aile 104 qui porte au moins un moteur 106 fonctionnant avec du dihydrogène comme carburant. Dans le mode de réalisation de l'invention présenté à la Fig. 1, le moteur 106 est un moteur à hélice, mais tout autre type de moteur est envisageable.

La flèche 107 indique la direction en marche avant de l'aéronef 100.

L'aéronef 100 comporte un premier réservoir 110a et un deuxième réservoir 110b dans lesquels est stocké le dihydrogène sous forme liquide. Dans le mode de réalisation de l'invention, les deux réservoirs 110a-b sont disposés à l'arrière du fuselage 102, mais un positionnement différent est possible.

L'aéronef 100 comporte également un système d'alimentation 150 qui assure la connexion fluidique entre les réservoirs 110a-b et chaque moteur 106.

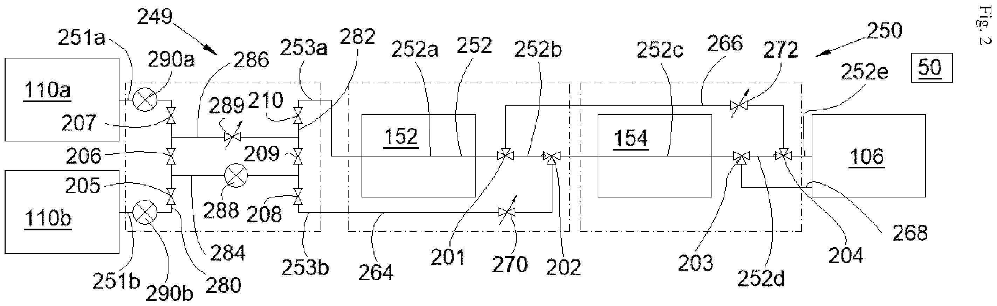

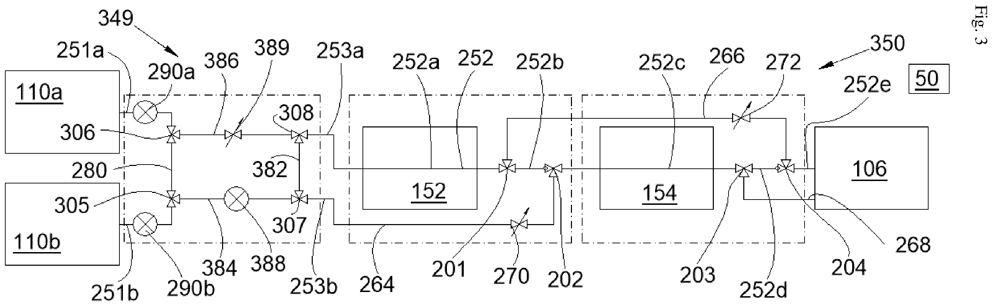

La Fig. 2 montre le système d'alimentation 250 selon un premier mode de réalisation et la Fig. 3 montre le système d'alimentation 350 selon un deuxième mode de réalisation.

Le système d'alimentation 250, 350 est arrangé entre deux réservoirs 110a-b et un moteur 106 et il y a alors un tel système d'alimentation 250, 350 pour chaque moteur 106.

Pour réchauffer le dihydrogène et l'amener en phase gazeuse, le système d'alimentation 250, 350 comporte un premier réchauffeur 152 et un deuxième réchauffeur 154 qui sont montés en série. Un tel réchauffeur 152, 154 est par exemple un échangeur thermique qui assure un échange de calories entre un fluide caloporteur chaud et le dihydrogène froid, ou un système avec une résistance chauffante. Bien entendu, le système d'alimentation 250 peut comporter un seul réchauffeur, ou plus de deux réchauffeurs.

Dans certaines phases de vol, il peut être nécessaire de réguler la température du dihydrogène et de compenser une baisse de température de la source de chaleur du réchauffeur et pour ce faire, des boucles de recirculation sont mises en place pour prélever une partie du dihydrogène en sortie d'un réchauffeur 152, 154 et le réinjecter à l'entrée du même réchauffeur 152, 154 afin de le mélanger avec du dihydrogène non encore réchauffé. Un tel mélange permet de compenser une baisse de température de la source de chaleur du réchauffeur afin de limiter la variation de température du dihydrogène à la sortie du réchauffeur. Comme cela est expliqué ci-dessous, en cas d'incident, chaque boucle de recirculation peut être convertie en boucle de déviation qui transporte du dihydrogène vers le moteur 106, ce qui évite d'avoir à dupliquer les canalisations de transport du dihydrogène.

Le système d'alimentation 250, 350 comporte un module d'alimentation 249, 349 qui est différent pour les deux modes de réalisation et qui comporte des moyens pour prélever le dihydrogène liquide dans les deux réservoirs 110a-b et alimenter les réchauffeurs 152 et 154 et ensuite le moteur 106. Ces moyens peuvent prendre la forme de canalisations, sur lesquelles sont agencées des pompes, et éventuellement des électrovannes, afin de prélever le dihydrogène des réservoirs 110a-b et d'alimenter les réchauffeurs 152 et 154, et le moteur 106. Les canalisations dans lesquelles circule le dihydrogène peuvent être des canalisations à simple peau, ou à double peau.

Le module d'alimentation 249, 349 comporte, pour chaque réservoir 110a-b, une canalisation d'apport 251a-b fluidiquement connectée audit réservoir 110a-b. Le module d'alimentation 249, 349 comporte également une première canalisation de sortie 253a et une deuxième canalisation de sortie 253b.

Le module d'alimentation 249, 349 comporte également des moyens pour canaliser le dihydrogène des canalisations d'apport 251a-b vers alternativement la première canalisation de sortie 253a ou la deuxième canalisation de sortie 253b. Ces moyens peuvent prendre la forme de canalisations, sur lesquelles sont agencées des électrovannes afin d'autoriser ou d'empêcher le dihydrogène de circuler entre les canalisations d'apport 251a-b et les canalisations de sortie 253a-b.

Lorsque le dihydrogène est canalisé vers la première canalisation de sortie 253a, les moyens du module d'alimentation 249, 349 sont arrangés pour canaliser le dihydrogène provenant de la deuxième canalisation de sortie 253b vers la première canalisation de sortie 253a afin de boucler sur l'entrée du premier réchauffeur 152.

Le système d'alimentation 250, 350 comporte une canalisation principale 252 qui traverse le premier réchauffeur 152 et le deuxième réchauffeur 154 et qui est fluidiquement connectée entre la première canalisation de sortie 253a et le moteur 106.

Le long de la canalisation principale 252 sont installées entre le premier réchauffeur 152 et le deuxième réchauffeur 154, une première électrovanne 201 à trois voies et une deuxième électrovanne 202 à trois voies avec un clapet anti-retour. La deuxième électrovanne 202 est disposée entre la première électrovanne 201 et le deuxième réchauffeur 154.

Le long de la canalisation principale 252 sont installées entre le deuxième réchauffeur 154 et le moteur 106, une troisième électrovanne 203 à trois voies et une quatrième électrovanne 204 à trois voies avec un clapet anti-retour. La quatrième électrovanne 204 est disposée entre la troisième électrovanne 203 et le moteur 106.

La canalisation principale 252 est ainsi divisée en une première partie 252a entre la première canalisation de sortie 253a et la première électrovanne 201 en traversant le premier réchauffeur 152, une deuxième partie 252b entre la première électrovanne 201 et la deuxième électrovanne 202, une troisième partie 252c entre la deuxième électrovanne 202 et la troisième électrovanne 203 en traversant le deuxième réchauffeur 154, une quatrième partie 252d entre la troisième électrovanne 203 et la quatrième électrovanne 204 et une cinquième partie 252e entre la quatrième électrovanne 204 et le moteur 106.

La première électrovanne 201 présente une voie fluidiquement connectée à la première partie 252a et une voie fluidiquement connectée à la deuxième partie 252b.

La deuxième électrovanne 202 présente une voie fluidiquement connectée à la deuxième partie 252b et une voie fluidiquement connectée à la troisième partie 252c.

La troisième électrovanne 203 présente une voie fluidiquement connectée à la troisième partie 252c et une voie fluidiquement connectée à la quatrième partie 252d.

La quatrième électrovanne 204 présente une voie fluidiquement connectée à la quatrième partie 252d et une voie fluidiquement connectée à la cinquième partie 252e.

La deuxième électrovanne 202 autorise l'écoulement du premier réchauffeur 152 vers le deuxième réchauffeur 154 mais empêche l'écoulement dans la deuxième partie 252b depuis la deuxième électrovanne 202 vers le premier réchauffeur 152. C'est donc la voie qui est fluidiquement connectée à la deuxième partie 252b qui présente un clapet anti-retour.

La quatrième électrovanne 204 autorise l'écoulement du deuxième réchauffeur 154 vers le moteur 106 mais empêche l'écoulement dans la quatrième partie 252d de la quatrième électrovanne 204 vers le deuxième réchauffeur 154. C'est donc la voie qui est fluidiquement connectée à la quatrième partie 252d qui présente un clapet anti-retour.

Le système d'alimentation 250, 350 comporte une première canalisation de déviation 264 qui est fluidiquement connectée entre la deuxième canalisation de sortie 253b et une voie de la deuxième électrovanne 202.

Le système d'alimentation 250, 350 comporte une deuxième canalisation de déviation 266 qui est fluidiquement connectée entre une voie de la première électrovanne 201 et une voie de la quatrième électrovanne 204.

Chaque électrovanne 201, 202, 203, 204 est commandée en ouverture et en fermeture par une unité de contrôle 50 du système d'alimentation 250, 350 en fonction des besoins. De la même manière, les moyens du module d'alimentation 249, 349 sont commandés par l'unité de contrôle 50 pour que le dihydrogène s'écoule depuis la première canalisation de sortie 253a ou la deuxième canalisation de sortie 253b.

En fonctionnement normal, le dihydrogène est canalisé par le module d'alimentation 249, 349 vers la première canalisation de sortie 253a, puis il s'écoule dans la canalisation principale 252 jusqu'au moteur 106. Les voies de chaque électrovanne 201, 202, 203, 204 qui sont fluidiquement connectées à la canalisation principale 152 sont ouvertes.

Dans le même temps, si besoin, du dihydrogène est prélevé au niveau de la deuxième électrovanne 202 pour être canalisé vers la deuxième canalisation de sortie 253b à travers la première canalisation de déviation 264 afin d'être réintroduit dans la première canalisation de sortie 253a et se mélanger à du dihydrogène venant des réservoirs 110a-b et retraverser le premier réchauffeur 152. Selon le cas, la voie de la deuxième électrovanne 202 fluidiquement connectée à la première canalisation de déviation 264 est ouverte ou fermée.

Dans le même temps, si besoin, du dihydrogène est prélevé au niveau de la quatrième électrovanne 204 pour être canalisé vers la première électrovanne 201 à travers la deuxième canalisation de déviation 266 afin d'être réintroduit dans la canalisation principale 252 et se mélanger à du dihydrogène sortant du premier réchauffeur 152 et retraverser le deuxième réchauffeur 154. Selon le cas, la voie de la quatrième électrovanne 204 fluidiquement connectée à la deuxième canalisation de déviation 266 et la voie de la première électrovanne 201 fluidiquement connectée à la deuxième canalisation de déviation 266 sont ouvertes ou fermées.

En cas d'incident au niveau de la première partie 252a ou du premier réchauffeur 152, l'unité de contrôle 50 commande le module d'alimentation 249, 349 pour qu'il délivre le dihydrogène au niveau de la deuxième canalisation de sortie 253b, la fermeture de la voie de la première électrovanne 201 fluidiquement connectée à la première partie 252a et l'ouverture de la voie de la deuxième électrovanne 202 fluidiquement connectée à la première canalisation de déviation 264. Le dihydrogène s'écoule alors à partir de la deuxième canalisation de sortie 253b, à travers la première canalisation de déviation 264 jusqu'à la deuxième électrovanne 202 pour rejoindre la deuxième partie 252b jusqu'au moteur 106 par la voie normale. Il n'y alors pas de recirculation au niveau de la première canalisation de déviation 264. Les autres voies fluidiquement connectées à la canalisation principale 252 sont ouvertes et comme précédemment, une recirculation peut être réalisée dans la deuxième canalisation de déviation 266.

En cas d'incident au niveau de la première canalisation de déviation 264, l'unité de contrôle 50 commande la fermeture de la voie de la deuxième électrovanne 202 fluidiquement connectée à la première canalisation de déviation 264. Le dihydrogène suit alors le chemin normal mais il n'y a pas de recirculation à travers la première canalisation de déviation 264. Les voies fluidiquement connectées à la canalisation principale 252 sont ouvertes et comme précédemment, une recirculation peut être réalisée dans la deuxième canalisation de déviation 266.

En cas d'incident au niveau de la troisième partie 252c ou du deuxième réchauffeur 154, l'unité de contrôle 50 commande la fermeture de la voie de la deuxième électrovanne 202 et la fermeture de la voie de la troisième électrovanne 203 qui sont fluidiquement connectées à la troisième partie 252c et l'ouverture des voies fluidiquement connectées à la deuxième canalisation de déviation 266. Le dihydrogène s'écoule alors à partir de la première électrovanne 201 à travers la deuxième canalisation de déviation 266 pour atteindre le moteur 106 à travers la quatrième électrovanne 204. Il n'y alors pas de recirculation au niveau de la deuxième canalisation de déviation 266. Les autres voies fluidiquement connectées à la canalisation principale 252 sont ouvertes et comme précédemment, une recirculation peut être réalisée dans la première canalisation de déviation 264.

En cas d'incident au niveau de la deuxième canalisation de déviation 266, l'unité de contrôle 50 commande la fermeture de la voie de la première électrovanne 201 fluidiquement connectée à la deuxième canalisation de déviation 266 et la fermeture de la voie de la quatrième électrovanne 204 fluidiquement connectée à la deuxième canalisation de déviation 266. Le dihydrogène suit alors le chemin normal mais il n'y a pas de recirculation à travers la deuxième canalisation de déviation 266. Les voies fluidiquement connectées à la canalisation principale 252 sont ouvertes et comme précédemment, une recirculation peut être réalisée dans la première canalisation de déviation 264.

Ainsi, avec un tel arrangement, même en cas d'incident, par exemple de panne, sur l'un des éléments du système d'alimentation 250, 350, le dihydrogène arrive au moteur 106 en passant à travers au moins des réchauffeurs 152, 154 sans qu'il soit nécessaire de mettre en place un système redondant.

Dans le mode de réalisation de l'invention présenté ici, le système d'alimentation 250, 350 comporte une canalisation de sécurité 268 qui est fluidiquement connectée entre une voie de la troisième électrovanne 203 et le moteur 106 pour assurer l'alimentation du moteur même en cas de problème sur la quatrième partie 252d ou la cinquième partie 252e.

Pour réguler le débit dans les canalisations de déviation 264 et 266, le système d'alimentation 250, 350 comporte, pour chaque canalisation de déviation 264, 266, une électrovanne de régulation 270, 272 à deux voies qui est montée sur ladite canalisation de déviation 264, 266. Chaque canalisation de déviation 264, 266 est ainsi en deux parties de part et d'autre de l'électrovanne de régulation 270, 272 qui comporte pour chaque partie, une voie fluidiquement connectée à ladite partie. Ces électrovannes 270 et 272 sont également commandées par l'unité de contrôle 50 ce qui permet de régler le débit de dihydrogène dans la canalisation de déviation 264, 266, et donc la quantité de dihydrogène qui va circuler dans la canalisation principale 252 et en outre, le débit sera différent en mode de fonctionnement normal ou en cas d'incident.

L'électrovanne de régulation 270, 272 peut être intégrée respectivement à la deuxième électrovanne 202 au niveau de la voie fluidiquement connectée à la première canalisation de déviation 264, ou la quatrième électrovanne 204 au niveau de la voie fluidiquement connectée à la deuxième canalisation de déviation 266.

Pour que l'unité de contrôle 50 commande les différents éléments en fonction des circonstances, le système d'alimentation 250, 350 comporte des moyens de détection prévus pour détecter une fuite d'hydrogène sur chaque canalisation et chaque réchauffeur 152, 154, pour détecter un défaut de fonctionnement d'un réchauffeur 152, 154 ou d'une électrovanne. Ces moyens de détection sont alors prévus pour informer l'unité de contrôle 50 qui va alors commander les éléments du système d'alimentation 250, 350 en conséquence.

Pour détecter un défaut de fonctionnement d'un réchauffeur 152, 154 ou d'une électrovanne, ou d'une pompe, les moyens de détection prennent par exemple la forme d'un système de surveillance intégré audit réchauffeur 152, 154, ou à l'électrovanne, ou à la pompe. Par exemple, pour un réchauffeur comprenant un fluide caloporteur circulant dans ledit réchauffeur, le système de surveillance peut comprendre un capteur de pression configuré pour détecter une variation (par exemple une baisse) de pression du fluide caloporteur circulant dans le réchauffeur. Selon un autre exemple, le système de surveillance comprend un capteur de température configuré pour détecter une température du dihydrogène en sortie du réchauffeur et pour envoyer cette température détectée à un comparateur, le comparateur étant configuré pour vérifier que cette température détectée est comprise dans une plage de température prédéterminée, et pour émettre une alerte si la température détectée est en dehors de la plage de température prédéterminée.

Pour détecter une fuite de dihydrogène au niveau d'une canalisation, il est possible d'utiliser des canalisations à double peau avec une peau intérieure entourée d'une peau extérieure où le dihydrogène circule dans la peau intérieure et où les moyens de détection prennent par exemple la forme de détecteurs ou de capteurs de dihydrogène disposés entre les deux peaux afin de détecter la présence de dihydrogène si la peau intérieure fuit.

Pour détecter une fuite de dihydrogène au niveau d'un réchauffeur 152, 154, il est possible d'enfermer chaque réchauffeur 152, 154 dans une boîte étanche où les moyens de détection prennent par exemple la forme d'un détecteur de dihydrogène arrangé dans ladite boîte.

Afin de détecter une présence de dihydrogène à l'extérieur du système d'alimentation 250, 350, c'est-à-dire autrement que sur une pompe, une électrovanne ou un réchauffeur, un capteur de dihydrogène peut être installé.

Dans le premier mode de réalisation de l'invention, le module d'alimentation 249 comporte une canalisation amont 280 et une canalisation aval 282. La canalisation amont 280 est fluidiquement connectée entre les canalisations d'apport 251a et 251b et la canalisation aval 282 est fluidiquement connectée entre la première canalisation de sortie 253a et la deuxième canalisation de sortie 253b.

Le module d'alimentation 249 comporte également une première canalisation de liaison 284 et une deuxième canalisation de liaison 286. La première canalisation de liaison 284 et la deuxième canalisation de liaison 286 sont fluidiquement connectées en parallèle entre la canalisation amont 280 et la canalisation aval 282.

La première canalisation de liaison 284 est équipée d'une pompe 288 qui assure le déplacement du dihydrogène dans ladite première canalisation de liaison 284 de la canalisation amont 280 vers la canalisation aval 282.

Chaque canalisation d'apport 251a-b est équipée d'une pompe 290a-b qui assure le déplacement du dihydrogène de la canalisation d'apport 251a-b vers la canalisation amont 280.

Chaque pompe 288, 290a-b est commandée par l'unité de contrôle 50.

La deuxième canalisation de liaison 286 est équipée d'une électrovanne de régulation 289 à deux voies commandée par l'unité de contrôle 50.

La canalisation amont 280 est équipée d'une cinquième électrovanne 205 à deux voies, d'une sixième électrovanne 206 à deux voies et d'une septième électrovanne 207 à deux voies. La cinquième électrovanne 205 est disposée entre la pompe 290b de la canalisation d'apport 251b du deuxième réservoir 110b et la première canalisation de liaison 284. La sixième électrovanne 206 est disposée entre la première canalisation de liaison 284 et la deuxième canalisation de liaison 286. La septième électrovanne 207 est disposée entre la pompe 290a de la canalisation d'apport 251a du premier réservoir 110a et la deuxième canalisation de liaison 286.

La canalisation aval 282 est équipée d'une huitième électrovanne 208 à deux voies, d'une neuvième électrovanne 209 à deux voies et d'une dixième électrovanne 210 à deux voies. La huitième électrovanne 208 est disposée entre la deuxième canalisation de sortie 253b et la première canalisation de liaison 284. La neuvième électrovanne 209 est disposée entre la première canalisation de liaison 284 et la deuxième canalisation de liaison 286. La dixième électrovanne 210 est disposée entre la première canalisation de sortie 253a et la deuxième canalisation de liaison 286.

Chacune des électrovannes équipant la canalisation amont 280 et la canalisation aval 282 est commandée par l'unité de contrôle 50.

En fonctionnement normal, les électrovannes montées sur la canalisation amont 280 et la canalisation aval 282 sont ouvertes. Le dihydrogène circule des réservoirs 110a-b vers la canalisation amont 280 pour être canalisé vers la première canalisation de liaison 284 puis vers la canalisation aval 282 afin de rejoindre la première canalisation de sortie 253a.

Dans le même temps, si besoin, du dihydrogène provenant de la première canalisation de déviation 264 est réinjecté au niveau de la huitième électrovanne 208.

Dans le même temps, si besoin, du dihydrogène est prélevé entre la neuvième électrovanne 209 et la dixième électrovanne 210 à travers la deuxième canalisation de liaison 286 et la quantité prélevée est régulée par l'électrovanne de régulation 289.

En cas d'incident au niveau de la première partie 252a ou du premier réchauffeur 152, l'unité de contrôle 50 commande la fermeture de la dixième électrovanne 210 et le dihydrogène est alors canalisé vers la deuxième canalisation de sortie 253b. Les autres électrovannes du module d'alimentation 249 sont ouvertes et une recirculation peut être réalisée dans la deuxième canalisation de liaison 286.

En cas d'incident au niveau de la première canalisation de liaison 284 ou de la pompe 288 qui y est installée, l'unité de contrôle 50 commande la fermeture de la cinquième électrovanne 205, de la sixième électrovanne 206, de la huitième électrovanne 208 et de la neuvième électrovanne 209 afin d'isoler la première canalisation de liaison 284 et la pompe 288. Le dihydrogène passe alors par la deuxième canalisation de liaison 286 pour rejoindre la première canalisation de sortie 253a.

En cas d'incident au niveau de la deuxième canalisation de liaison 286 ou de l'électrovanne de régulation 289 qui y est installée, l'unité de contrôle 50 commande la fermeture de la sixième électrovanne 206, de la septième électrovanne 207, de la neuvième électrovanne 209 et de la dixième électrovanne 210 afin d'isoler la deuxième canalisation de liaison 286 et l'électrovanne de régulation 289. Le dihydrogène passe alors par la première canalisation de liaison 284 pour rejoindre la première canalisation de sortie 253a.

Dans le deuxième mode de réalisation de l'invention, le module d'alimentation 349 comporte une canalisation amont 380 et une canalisation aval 382. La canalisation amont 380 est fluidiquement connectée entre les canalisations d'apport 251a et 251b et la canalisation aval 382 est fluidiquement connectée entre la première canalisation de sortie 253a et la deuxième canalisation de sortie 253b.

Le module d'alimentation 349 comporte également une première canalisation de liaison 384 et une deuxième canalisation de liaison 386. La première canalisation de liaison 384 et la deuxième canalisation de liaison 386 sont fluidiquement connectées en parallèle entre la canalisation amont 380 et la canalisation aval 382.

La première canalisation de liaison 384 est équipée d'une pompe 388 qui assure le déplacement du dihydrogène dans ladite première canalisation de liaison 384 de la canalisation amont 380 vers la canalisation aval 382.

Chaque canalisation d'apport 251a-b est équipée d'une pompe 290a-b qui assure le déplacement du dihydrogène de la canalisation d'apport 251a-b vers la canalisation amont 380.

Chaque pompe 388, 290a-b est commandée par l'unité de contrôle 50.

La deuxième canalisation de liaison 386 est équipée d'une électrovanne de régulation 389 à deux voies commandée par l'unité de contrôle 50.

Le module d'alimentation 349 comporte une cinquième électrovanne 305 à trois voies, une sixième électrovanne 306 à trois voies, une septième électrovanne 307 à trois voies et une huitième électrovanne 308 à trois voies.

Pour la cinquième électrovanne 305, une voie est fluidiquement connectée à la canalisation d'apport 251b du deuxième réservoir 110b, une voie est fluidiquement connectée à la canalisation amont 380 et une voie est fluidiquement connectée à la première canalisation de liaison 384.

Pour la sixième électrovanne 306, une voie est fluidiquement connectée à la canalisation d'apport 251a du premier réservoir 110a, une voie est fluidiquement connectée à la canalisation amont 380 et une voie est fluidiquement connectée à la deuxième canalisation de liaison 386.

Pour la septième électrovanne 307, une voie est fluidiquement connectée à la deuxième canalisation de sortie 253b, une voie est fluidiquement connectée à la canalisation aval 382 et une voie est fluidiquement connectée à la première canalisation de liaison 384.

Pour la huitième électrovanne 308, une voie est fluidiquement connectée à la première canalisation de sortie 253a, une voie est fluidiquement connectée à la canalisation aval 382 et une voie est fluidiquement connectée à la deuxième canalisation de liaison 386.

Chacune des électrovannes montées sur la canalisation amont 380 et la canalisation aval 382 est commandée par l'unité de contrôle 50.

En fonctionnement normal, les électrovannes montées sur la canalisation amont 380 et la canalisation aval 382 sont ouvertes. Le dihydrogène circule des réservoirs 110a-b vers la canalisation amont 380 pour être canalisé vers la première canalisation de liaison 384 puis vers la canalisation aval 382 afin de rejoindre la première canalisation de sortie 253a.

Dans le même temps, si besoin, du dihydrogène provenant de la première canalisation de déviation 264 est réinjecté au niveau de la septième électrovanne 307.

Dans le même temps, si besoin, du dihydrogène est prélevé à la huitième électrovanne 308 à travers la deuxième canalisation de liaison 386 et la quantité prélevée est régulée par l'électrovanne de régulation 389.

En cas d'incident au niveau de la première partie 252a ou du premier réchauffeur 152, l'unité de contrôle 50 commande la fermeture de la voie de la huitième électrovanne 308 et le dihydrogène est alors canalisé vers la deuxième canalisation de sortie 253b. Les autres électrovannes du module d'alimentation 349 sont ouvertes et une recirculation peut être réalisée dans la deuxième canalisation de liaison 386.

En cas d'incident au niveau de la première canalisation de liaison 384 ou de la pompe 388 qui y est installée, l'unité de contrôle 50 commande la fermeture de la voie de la cinquième électrovanne 305 fluidiquement connectée à la première canalisation de liaison 384 et la fermeture de la voie de la septième électrovanne 307 fluidiquement connectée à la première canalisation de liaison 384. Les autres voies de la cinquième électrovanne 305 et de la septième électrovanne 307 ainsi que les autres électrovannes 306, 308 restent ouvertes. Ainsi, la première canalisation de liaison 384 est isolée. Le dihydrogène rejoint alors la première canalisation de sortie 253a à travers la deuxième canalisation de liaison 386.

En cas d'incident au niveau de la deuxième canalisation de liaison 386 ou de l'électrovanne de régulation 389 qui y est installée, l'unité de contrôle 50 commande la fermeture de la voie de la sixième électrovanne 306 fluidiquement connectée à la deuxième canalisation de liaison 386 et la fermeture de la voie de la huitième électrovanne 308 fluidiquement connectée à la deuxième canalisation de liaison 386. Les autres voies de la sixième électrovanne 306 et de la huitième électrovanne 308 ainsi que les autres électrovannes 305, 307 restent ouvertes. Ainsi, la deuxième canalisation de liaison 386 est isolée. Le dihydrogène rejoint alors la première canalisation de sortie 253a à travers la première canalisation de liaison 384.

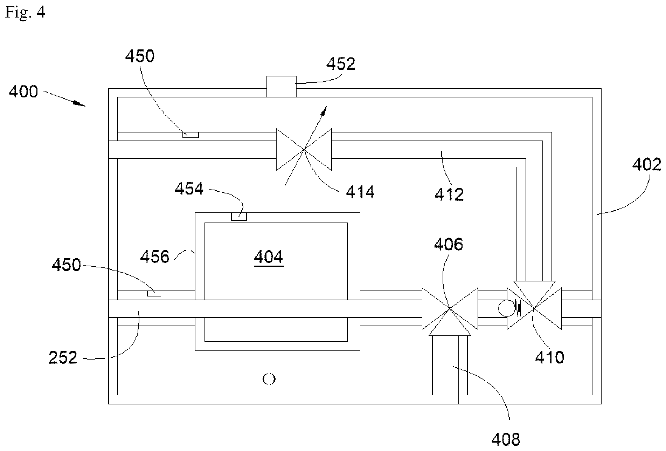

La Fig. 4 montre un module 400 qui peut être mis en œuvre dans le système d'alimentation 250, 350 selon l'invention. Le module 400 comporte ici un caisson 402 étanche dans lequel est installé un réchauffeur 404 qui peut être le premier ou le deuxième réchauffeur 152, 154 et qui est traversé par la canalisation principale 252 qui débouche de part et d'autre à l'extérieur du caisson 402.

Le module 400 comporte également une électrovanne de sortie 406 à trois voies arrangée sur la canalisation principale 252 en sortie du réchauffeur 404. L'électrovanne de sortie 406 peut être la première électrovanne 201 ou la troisième électrovanne 203 et elle présente deux voies fluidiquement connectée à la canalisation principale 252.

À l'intérieur du module 400 est également présente une première canalisation 408 qui est fluidiquement connectée à la troisième voie de l'électrovanne de sortie 406 et qui, selon le cas, est la canalisation de déviation 266 ou la canalisation de sécurité 268.

En aval de l'électrovanne de sortie 406, le module 400 comporte une électrovanne en série 410 à trois voies avec un clapet anti-retour arrangé sur la canalisation principale 252. L'électrovanne en série 410 présente deux voies fluidiquement connectées à la canalisation principale 252 où la voie présentant le clapet anti-retour est fluidiquement connectée à la partie de la canalisation principale 252 issue de l'électrovanne de sortie 406. L'électrovanne en série 410 est, selon le cas, la deuxième électrovanne 202 ou la quatrième électrovanne 204. Le module 400 comporte également une canalisation de déviation 412 qui est fluidiquement connectée à une troisième voie de l'électrovanne en série 410 et qui débouche hors du caisson 402. Selon le cas, la canalisation de déviation 412 peut être la première canalisation de déviation 264 ou la deuxième canalisation de déviation 266.

Une électrovanne de régulation 414 est installée sur la canalisation de déviation 412. Comme discuté ci-dessus, chaque canalisation 252, 412 peut être constituée d'une double peau avec une peau intérieure entourée d'une peau extérieure, où le dihydrogène circule dans la peau intérieure et où les moyens de détection 450 prennent par exemple la forme de détecteurs de dihydrogène disposés entre les deux peaux.

Un autre détecteur de dihydrogène 452 est ici disposé au niveau du caisson 402 pour détecter une éventuelle fuite dans le caisson 402. Une vanne d'évacuation de surpression, ou un disque fusible de surpression, peut être disposée au niveau du caisson 402, et reliée à une canalisation d'évacuation vers l'extérieur du caisson 402, afin de stabiliser la pression dans le caisson 402 en cas d'une éventuelle fuite dans le caisson 402, qui causerait une surpression. Un autre détecteur de dihydrogène 454 est ici disposé dans une boîte 456 dans laquelle loge de manière étanche le réchauffeur 404.

Le caisson 402 peut être rempli d'un gaz inerte comme par exemple du diazote. En variante, le caisson 402 peut être mis sous vide.

Selon un mode de réalisation, l'unité de contrôle 50 comporte, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage, tel qu'un lecteur de cartes SD (« Secure Digital » en anglais) ; au moins une interface de communication, permettant par exemple à l'unité de contrôle de communiquer avec les électrovannes, les pompes, etc.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Système d'alimentation (250, 350) pour un aéronef (100) comportant un premier et un deuxième réservoirs (110a-b) de dihydrogène et au moins un moteur (106), ledit système d'alimentation (250, 350) comportant :
- un module d'alimentation (249, 349) comportant une première canalisation de sortie (253a), une deuxième canalisation de sortie (253b), pour chaque réservoir (110a-b), une canalisation d'apport (251a-b) destinée à être fluidiquement connectée audit réservoir (110a-b) et des moyens arrangés pour canaliser le dihydrogène des canalisations d'apport (251a-b) vers alternativement la première canalisation de sortie (253a) ou la deuxième canalisation de sortie (253b) et, lorsque le dihydrogène est canalisé vers la première canalisation de sortie (253a), pour canaliser le dihydrogène provenant de la deuxième canalisation de sortie (253b) vers la première canalisation de sortie (253a),
- un premier réchauffeur (152),
- un deuxième réchauffeur (154),
- une canalisation principale (252) traversant le premier réchauffeur (152) et le deuxième réchauffeur (154) et fluidiquement connectée entre la première canalisation de sortie (253a) et le moteur (106), le long de laquelle sont installées, d'une part, entre le premier réchauffeur (152) et le deuxième réchauffeur (154), une première électrovanne (201) à trois voies et une deuxième électrovanne (202) à trois voies avec un clapet anti-retour disposé entre la première électrovanne (201) et le deuxième réchauffeur (154), et, d'autre part, entre le deuxième réchauffeur (154) et le moteur (106), une troisième électrovanne (203) à trois voies et une quatrième électrovanne (204) à trois voies avec un clapet anti-retour disposé entre la troisième électrovanne (203) et le moteur (106), où la deuxième électrovanne (202) autorise l'écoulement du premier réchauffeur (152) vers le deuxième réchauffeur (154) mais empêche l'écoulement depuis la deuxième électrovanne (202) vers le premier réchauffeur (152), où la quatrième électrovanne (204) autorise l'écoulement du deuxième réchauffeur (154) vers le moteur (106) mais empêche l'écoulement de la quatrième électrovanne (204) vers le deuxième réchauffeur (154),
- une première canalisation de déviation (264) fluidiquement connectée entre la deuxième canalisation de sortie (253b) et une voie de la deuxième électrovanne (202),
- une deuxième canalisation de déviation (266) fluidiquement connectée entre une voie de la première électrovanne (201) et une voie de la quatrième électrovanne (204),
- des moyens de détection prévus pour détecter une fuite d'hydrogène sur chaque canalisation et chaque réchauffeur (152, 154), pour détecter un défaut de fonctionnement d'un réchauffeur (152, 154) ou d'une électrovanne, et pour délivrer des informations représentatives d'une fuite d'hydrogène ou d'un défaut de fonctionnement détecté, et
- une unité de contrôle (50) arrangée pour commander en ouverture et en fermeture chaque électrovanne (201, 202, 203, 204) et les moyens du module d'alimentation (249, 349) en fonction des informations délivrées par les moyens de détection.

2. Système d'alimentation (250, 350) selon la revendication 1, **caractérisé en ce qu'**il comporte, pour chaque canalisation de déviation (264, 266), une électrovanne de régulation (270, 272) à deux voies qui est montée sur ladite canalisation de déviation (264, 266) et qui est commandée par l'unité de contrôle (50).

3. Système d'alimentation (250, 350) selon l'une des revendications 1 ou 2, **caractérisé en ce qu'**il comporte une canalisation de sécurité (268) qui est fluidiquement connectée entre une voie de la troisième électrovanne (203) et le moteur (106).

4. Système d'alimentation (250) selon l'une des revendications 1 à 3, **caractérisé en ce que** chaque canalisation d'apport (251a-b) est équipée d'une pompe (290a-b), et **en ce que** le module d'alimentation (249) comporte :
- une canalisation amont (280) fluidiquement connectée entre les canalisations d'apport (251a, 251b),
- une canalisation aval (282) fluidiquement connectée entre la première canalisation de sortie (253a) et la deuxième canalisation de sortie (253b),
- une première canalisation de liaison (284) et une deuxième canalisation de liaison (286) fluidiquement connectées en parallèle entre la canalisation amont (280) et la canalisation aval (282), où la première canalisation de liaison (284) est équipée d'une pompe (288), où la deuxième canalisation de liaison (286) est équipée d'une électrovanne de régulation (289) à deux voies,
- une cinquième électrovanne (205) à deux voies montée sur la canalisation amont (280) entre la pompe (290b) de la canalisation d'apport (251b) du deuxième réservoir (110b) et la première canalisation de liaison (284),
- une sixième électrovanne (206) à deux voies montée sur la canalisation amont (280) entre la première canalisation de liaison (284) et la deuxième canalisation de liaison (286),
- une septième électrovanne (207) à deux voies montée sur la canalisation amont (280) entre la pompe (290a) de la canalisation d'apport (251a) du premier réservoir (110a) et la deuxième canalisation de liaison (286),
- une huitième électrovanne (208) à deux voies montée sur la canalisation aval (282) entre la deuxième canalisation de sortie (253b) et la première canalisation de liaison (284),
- une neuvième électrovanne (209) à deux voies montée sur la canalisation aval (282) entre la première canalisation de liaison (284) et la deuxième canalisation de liaison (286), et
- une dixième électrovanne (210) à deux voies montée sur la canalisation aval (282) entre la première canalisation de sortie (253a) et la deuxième canalisation de liaison 286).

5. Système d'alimentation (350) selon l'une des revendications 1 à 3, **caractérisé en ce que** chaque canalisation d'apport (251a-b) est équipée d'une pompe (290a-b), et **en ce que** le module d'alimentation (349) comporte :
- une canalisation amont (380) fluidiquement connectée entre les canalisations d'apport (251a, 251b),
- une canalisation aval (382) fluidiquement connectée entre la première canalisation de sortie (253a) et la deuxième canalisation de sortie (253b),
- une première canalisation de liaison (384) et une deuxième canalisation de liaison (386) fluidiquement connectées en parallèle entre la canalisation amont (380) et la canalisation aval (382), où la première canalisation de liaison (384) est équipée d'une pompe (388), où la deuxième canalisation de liaison (386) est équipée d'une électrovanne de régulation (389) à deux voies,
- une cinquième électrovanne (305) à trois voies avec une voie fluidiquement connectée à la canalisation d'apport (251b) du deuxième réservoir (110b), une voie fluidiquement connectée à la canalisation amont (380) et une voie fluidiquement connectée à la première canalisation de liaison (384),
- une sixième électrovanne (306) à trois voies avec une voie fluidiquement connectée à la canalisation d'apport (251a) du premier réservoir (110a), une voie fluidiquement connectée à la canalisation amont (380) et une voie fluidiquement connectée à la deuxième canalisation de liaison (386),
- une septième électrovanne (307) à trois voies avec une voie fluidiquement connectée à la deuxième canalisation de sortie (253b), une voie fluidiquement connectée à la canalisation aval (382) et une voie fluidiquement connectée à la première canalisation de liaison (384), et
- une huitième électrovanne (308) à trois voies avec une voie fluidiquement connectée à la première canalisation de sortie (253a), une voie fluidiquement connectée à la canalisation aval (382) et une voie fluidiquement connectée à la deuxième canalisation de liaison (386).

6. Système d'alimentation (350) selon l'une des revendications 1 à 5, **caractérisé en ce que** ledit système d'alimentation (350) comporte au moins un caisson (402) étanche agencé autour d'un des premier ou deuxième réchauffeurs (152, 154), ledit caisson (402) étant traversé par la canalisation principale (252).

7. Système d'alimentation (350) selon la revendication 6, **caractérisé en ce que** la canalisation principale (252) est une canalisation à double peau, comprenant une peau intérieure entourée d'une peau extérieure, et **en ce que** les moyens de détection comportent un détecteur de dihydrogène (450) disposé entre les peaux intérieure et extérieure de la canalisation principale (252).

8. Système d'alimentation (350) selon l'une des revendications 6 ou 7, **caractérisé en ce que** les moyens de détection comportent un détecteur de dihydrogène (452) disposé dans le caisson (402).

9. Système d'alimentation (350) selon l'une des revendications 6 à 8, **caractérisé en ce que** le caisson (402) est rempli d'un gaz inerte ou mis sous vide.

10. Aéronef (100) comportant un premier et un deuxième réservoirs (110a-b) de dihydrogène, au moins un moteur (106) et, pour chaque moteur (106), un système d'alimentation (250, 350) selon l'une des revendications précédentes, où chaque canalisation d'apport (251a-b) est fluidiquement connectée à un des premier ou deuxième réservoirs (110a-b), et où la canalisation principale (252) est fluidiquement connectée au moteur (106).

## Patentansprüche

1. Versorgungssystem (250, 350) für ein Flugzeug (100), umfassend einen ersten und einen zweiten Tank (110a-b) für Diwasserstoff und mindestens einen Motor (106), wobei das Versorgungssystem (250, 350) Folgendes umfasst:
- ein Versorgungsmodul (249, 349), umfassend eine erste Auslassleitung (253a), eine zweite Auslassleitung (253b), für jeden Tank (110a-b) eine Zufuhrleitung (251ab), die dazu bestimmt ist, mit dem Tank (110a-b) fluidisch verbunden zu sein, und Mittel, die dazu eingerichtet sind, den Diwasserstoff von den Zufuhrleitungen (251a-b) zu entweder der ersten Auslassleitung (253a) oder der zweiten Auslassleitung (253b) zu leiten und, wenn der Diwasserstoff zu der ersten Auslassleitung (253a) geleitet wird, den Diwasserstoff, der von der zweiten Auslassleitung (253b) kommt, zu der ersten Auslassleitung (253a) zu leiten,
- einen ersten Vorwärmer (152),
- einen zweiten Vorwärmer (154),
- eine Hauptleitung (252), die den ersten Vorwärmer (152) und den zweiten Vorwärmer (154) durchquert und zwischen der ersten Auslassleitung (253a) und dem Motor (106) fluidisch verbunden ist, entlang der einerseits zwischen dem ersten Vorwärmer (152) und dem zweiten Vorwärmer (154) ein erstes Dreiwege-Magnetventil (201) und ein zweites Dreiwege-Magnetventil (202) mit einem Rückschlagventil, das zwischen dem ersten Magnetventil (201) und dem zweiten Vorwärmer (154) angeordnet ist, und andererseits zwischen dem zweiten Vorwärmer (154) und dem Motor (106) ein drittes Dreiwege-Magnetventil (203) und ein viertes Dreiwege-Magnetventil (204) mit einem Rückschlagventil, das zwischen dem dritten Magnetventil (203) und dem Motor (106) angeordnet ist, installiert sind, wobei das zweite Magnetventil (202) den Durchfluss von dem ersten Vorwärmer (152) zu dem zweiten Vorwärmer (154) gestattet, aber den Durchfluss von dem zweiten Magnetventil (202) zu dem ersten Vorwärmer (152) verhindert, wobei das vierte Magnetventil (204) den Durchfluss von dem zweiten Vorwärmer (154) zu dem Motor (106) gestattet, aber den Durchfluss von dem vierten Magnetventil (204) zu dem zweiten Vorwärmer (154) verhindert,
- eine erste Bypassleitung (264), die zwischen der zweiten Auslassleitung (253b) und einem Weg des zweiten Magnetventils (202) fluidisch verbunden ist,
- eine zweite Bypassleitung (266), die zwischen einem Weg des ersten Magnetventils (201) und einem Weg des vierten Magnetventils (204) fluidisch verbunden ist,
- Detektionsmittel, die dazu vorgesehen sind, ein Wasserstoffleck in jeder Leitung und jedem Vorwärmer (152, 154) zu detektieren, eine Funktionsstörung eines Vorwärmers (152, 154) oder eines Magnetventils zu detektieren und Informationen bereitzustellen, die für ein detektiertes Wasserstoffleck oder eine detektierte Funktionsstörung repräsentativ sind, und
- eine Steuereinheit (50), die dazu eingerichtet ist, das Öffnen und Schließen jedes Magnetventils (201, 202, 203, 204) und der Mittel des Versorgungsmoduls (249, 349) in Abhängigkeit von den durch die Detektionsmittel bereitgestellten Informationen anzusteuern.

2. Versorgungssystem (250, 350) nach Anspruch 1, **dadurch gekennzeichnet, dass** es für jede Bypassleitung (264, 266) ein Zweiwege-Magnetregelventil (270, 272) umfasst, das in der Bypassleitung (264, 266) montiert ist und durch die Steuereinheit (50) angesteuert wird.

3. Versorgungssystem (250, 350) nach einem der Ansprüche 1 oder 2, **dadurch gekennzeichnet, dass** es eine Sicherheitsleitung (268) umfasst, die zwischen einem Weg des dritten Magnetventils (203) und dem Motor (106) fluidisch verbunden ist.

4. Versorgungssystem (250) nach einem der Ansprüche 1 bis 3, **dadurch gekennzeichnet, dass** jede Zufuhrleitung (251a-b) mit einer Pumpe (290a-b) ausgerüstet ist und dass das Versorgungsmodul (249) Folgendes umfasst:
- eine stromaufwärtige Leitung (280), die zwischen den Zufuhrleitungen (251a, 251b) fluidisch verbunden ist,
- eine stromabwärtige Leitung (282), die zwischen der ersten Auslassleitung (253a) und der zweiten Auslassleitung (253b) fluidisch verbunden ist,
- eine erste Verbindungsleitung (284) und eine zweite Verbindungsleitung (286), die zwischen der stromaufwärtigen Leitung (280) und der stromabwärtigen Leitung (282) parallel fluidisch verbunden sind, wobei die erste Verbindungsleitung (284) mit einer Pumpe (288) ausgerüstet ist, wobei die zweite Verbindungsleitung (286) mit einem Zweiwege-Magnetregelventil (289) ausgerüstet ist,
- ein fünftes Zweiwege-Magnetventil (205), das in der stromaufwärtigen Leitung (280) zwischen der Pumpe (290b) der Zufuhrleitung (251b) des zweiten Tanks (110b) und der ersten Verbindungsleitung (284) montiert ist,
- ein sechstes Zweiwege-Magnetventil (206), das in der stromaufwärtigen Leitung (280) zwischen der ersten Verbindungsleitung (284) und der zweiten Verbindungsleitung (286) montiert ist,
- ein siebtes Zweiwege-Magnetventil (207), das in der stromaufwärtigen Leitung (280) zwischen der Pumpe (290a) der Zufuhrleitung (251a) des ersten Tanks (110a) und der zweiten Verbindungsleitung (286) montiert ist,
- ein achtes Zweiwege-Magnetventil (208), das in der stromabwärtigen Leitung (282) zwischen der zweiten Auslassleitung (253b) und der ersten Verbindungsleitung (284) montiert ist,
- ein neuntes Zweiwege-Magnetventil (209), das in der stromabwärtigen Leitung (282) zwischen der ersten Verbindungsleitung (284) und der zweiten Verbindungsleitung (286) montiert ist, und
- ein zehntes Zweiwege-Magnetventil (210), das in der stromabwärtigen Leitung (282) zwischen der ersten Auslassleitung (253a) und der zweiten Verbindungsleitung (286) montiert ist.

5. Versorgungssystem (350) nach einem der Ansprüche 1 bis 3, **dadurch gekennzeichnet, dass** jede Zufuhrleitung (251a-b) mit einer Pumpe (290a-b) ausgerüstet ist und dass das Versorgungsmodul (349) Folgendes umfasst:
- eine stromaufwärtige Leitung (380), die zwischen den Zufuhrleitungen (251a, 251b) fluidisch verbunden ist,
- eine stromabwärtige Leitung (382), die zwischen der ersten Auslassleitung (253a) und der zweiten Auslassleitung (253b) fluidisch verbunden ist,
- eine erste Verbindungsleitung (384) und eine zweite Verbindungsleitung (386), die zwischen der stromaufwärtigen Leitung (380) und der stromabwärtigen Leitung (382) parallel fluidisch verbunden sind, wobei die erste Verbindungsleitung (384) mit einer Pumpe (388) ausgerüstet ist, wobei die zweite Verbindungsleitung (386) mit einem Zweiwege-Magnetregelventil (389) ausgerüstet ist,
- ein fünftes Dreiwege-Magnetventil (305), von dem ein Weg mit der Zufuhrleitung (251b) des zweiten Tanks (110b) fluidisch verbunden ist, ein Weg mit der stromaufwärtigen Leitung (380) fluidisch verbunden ist und ein Weg mit der ersten Verbindungsleitung (384) fluidisch verbunden ist,
- ein sechstes Dreiwege-Magnetventil (306), von dem ein Weg mit der Zufuhrleitung (251a) des ersten Tanks (110a) fluidisch verbunden ist, ein Weg mit der stromaufwärtigen Leitung (380) fluidisch verbunden ist und ein Weg mit der zweiten Verbindungsleitung (386) fluidisch verbunden ist,
- ein siebtes Dreiwege-Magnetventil (307), von dem ein Weg mit der zweiten Auslassleitung (253b) fluidisch verbunden ist, ein Weg mit der stromabwärtigen Leitung (382) fluidisch verbunden ist und ein Weg mit der ersten Verbindungsleitung (384) fluidisch verbunden ist, und
- ein achtes Dreiwege-Magnetventil (308), von dem ein Weg mit der ersten Auslassleitung (253a) fluidisch verbunden ist, ein Weg mit der stromabwärtigen Leitung (382) fluidisch verbunden ist und ein Weg mit der zweiten Verbindungsleitung (386) fluidisch verbunden ist.

6. Versorgungssystem (350) nach einem der Ansprüche 1 bis 5, **dadurch gekennzeichnet, dass** das Versorgungssystem (350) mindestens ein dichtes Gehäuse (402) umfasst, das um einen von dem ersten oder dem zweiten Vorwärmer (152, 154) herum angeordnet ist, wobei das Gehäuse (402) von der Hauptleitung (252) durchquert wird.

7. Versorgungssystem (350) nach Anspruch 6, **dadurch gekennzeichnet, dass** die Hauptleitung (252) eine doppelwandige Leitung ist, die eine Innenwand beinhaltet, die von einer Außenwand umgeben ist, und dass die Detektionsmittel einen Diwasserstoffdetektor (450) umfassen, der zwischen der Innen- und Außenwand der Hauptleitung (252) angeordnet ist.

8. Versorgungssystem (350) nach einem der Ansprüche 6 oder 7, **dadurch gekennzeichnet, dass** die Detektionsmittel einen Diwasserstoffdetektor (452) umfassen, der in dem Gehäuse (402) angeordnet ist.

9. Versorgungssystem (350) nach einem der Ansprüche 6 bis 8, **dadurch gekennzeichnet, dass** das Gehäuse (402) mit einem Inertgas gefüllt ist oder unter Vakuum steht.

10. Flugzeug (100), umfassend einen ersten und einen zweiten Tank (110a-b) für Diwasserstoff, mindestens einen Motor (106) und, für jeden Motor (106), ein Versorgungssystem (250, 350) nach einem der vorhergehenden Ansprüche, wobei jede Zufuhrleitung (251a-b) mit einem von dem ersten oder dem zweiten Tank (110a-b) fluidisch verbunden ist und wobei die Hauptleitung (252) mit dem Motor (106) fluidisch verbunden ist.

## Claims

1. Supply system (250, 350) for an aircraft (100) including first and second dihydrogen tanks (110a-b) and at least one engine (106), said supply system (250, 350) including:
- a supply module (249, 349) including a first outlet pipe (253a), a second outlet pipe (253b), for each tank (110a-b), a feed pipe (251a-b) intended to be fluidically connected to said tank (110a-b) and means arranged to channel dihydrogen from the feed pipes (251a-b) to alternatively the first outlet pipe (253a) or the second outlet pipe (253b) and, when dihydrogen is channelled to the first outlet pipe (253a), to channel dihydrogen coming from the second outlet pipe (253b) to the first outlet pipe (253a),
- a first heater (152),
- a second heater (154),
- a main pipe (252) passing through the first heater (152) and the second heater (154) and fluidically connected between the first outlet pipe (253a) and the engine (106), along which there are installed, on the one hand, between the first heater (152) and the second heater (154), a first three-port solenoid valve (201) and a second three-port solenoid valve (202) with a non-return valve disposed between the first solenoid valve (201) and the second heater (154), and, on the other hand, between the second heater (154) and the engine (106), a third three-port solenoid valve (203) and a fourth three-port solenoid valve (204) with a non-return valve disposed between the third solenoid valve (203) and the engine (106), where the second solenoid valve (202) allows flow from the first heater (152) to the second heater (154) but prevents flow from the second solenoid valve (202) to the first heater (152), where the fourth solenoid valve (204) allows flow from the second heater (154) to the engine (106) but prevents flow from the fourth solenoid valve (204) to the second heater (154),
- a first branch pipe (264) fluidically connected between the second outlet pipe (253b) and a port of the second solenoid valve (202),
- a second branch pipe (266) fluidically connected between a port of the first solenoid valve (201) and a port of the fourth solenoid valve (204),
- detection means intended to detect a leak of hydrogen on each pipe and each heater (152, 154), to detect a malfunction of a heater (152, 154) or a solenoid valve and to deliver information representative of a leak of hydrogen or a detected malfunction, and
- a control unit (50) arranged to control opening and closing of each solenoid valve (201, 202, 203, 204) and the means of the supply module (249, 349) as a function of information delivered by the detection means.

2. Supply system (250, 350) according to claim 1, **characterised in that** it includes, for each branch pipe (264, 266), a second two-port regulation solenoid valve (270, 272) that is mounted on said branch pipe (264, 266) and is controlled by the control unit (50).

3. Supply system (250, 350) according to either one of claims 1 or 2, **characterised in that** it includes a safety pipe (268) that is fluidically connected between a port of the third solenoid valve (203) and the engine (106).

4. Supply system (250) according to any one of claims 1 to 3, **characterised in that** each feed pipe (251a-b) is equipped with a pump (290a-b), and **in that** the supply module (249) includes:
- an upstream pipe (280) fluidically connected between the feed pipes (251a, 251b),
- a downstream pipe (282) fluidically connected between the first outlet pipe (253a) and the second outlet pipe (253b),
- a first connecting pipe (284) and a second connecting pipe (286) fluidically connected in parallel between the upstream pipe (280) and the downstream pipe (282), where the first connecting pipe (284) is equipped with a pump (288), where the second connecting pipe (286) is equipped with a two-port regulation solenoid valve (289),
- a fifth two-port solenoid valve (205) mounted on the upstream pipe (280) between the pump (290b) of the feed pipe (251b) of the second tank (110b) and the first connecting pipe (284),
- a sixth two-port solenoid valve (206) mounted on the upstream pipe (280) between the first connecting pipe (284) and the second connecting pipe (286),
- a seventh two-port solenoid valve (207) mounted on the upstream pipe (280) between the pump (290a) of the feed pipe (251a) of the first tank (110a) and the second connecting pipe (286),
- an eighth two-port solenoid valve (208) mounted on the downstream pipe (282) between the second outlet pipe (253b) and the first connecting pipe (284),
- a ninth two-port solenoid valve (209) mounted on the downstream pipe (282) between the first connecting pipe (284) and the second connecting pipe (286), and
- a tenth two-port solenoid valve (210) mounted on the downstream pipe (282) between the first outlet pipe (253a) and the second connecting pipe (286).

5. Supply system (350) according to any one of claims 1 to 3, **characterised in that** each feed pipe (251a-b) is equipped with a pump (290a-b), and **in that** the supply module (349) includes:
- an upstream pipe (380) fluidically connected between the feed pipes (251a, 251b),
- a downstream pipe (382) fluidically connected between the first outlet pipe (253a) and the second outlet pipe (253b),
- a first connecting pipe (384) and a second connecting pipe (386) fluidically connected in parallel between the upstream pipe (380) and the downstream pipe (382), where the first connecting pipe (384) is equipped with a pump (388), where the second connecting pipe (386) is equipped with a two-port regulation solenoid valve (389),
- a fifth three-port solenoid valve (305) with a port fluidically connected to the feed pipe (251b) of the second tank (110b), a port fluidically connected to the upstream pipe (380) and a port fluidically connected to the first connecting pipe (384),
- a sixth three-port solenoid valve (306) with a port fluidically connected to the feed pipe (251a) of the first tank (110a), a port fluidically connected to the upstream pipe (380) and a port fluidically connected to the second connecting pipe (386),
- a seventh three-port solenoid valve (307) with a port fluidically connected to the second outlet pipe (253b), a port fluidically connected to the downstream pipe (382) and a port fluidically connected to the first connecting pipe (384), and
- an eighth three-port solenoid valve (308) with a port fluidically connected to the first outlet pipe (253a), a port fluidically connected to the downstream pipe (382) and a port fluidically connected to the second connecting pipe (386).

6. Supply system (350) according to any one of claims 1 to 5, **characterised in that** said supply system (350) includes at least one sealed box (402) arranged around the first or second heater (152, 154), said box (402) having the main pipe (252) passing through it.

7. Supply system (350) according to claim 6, **characterised in that** the main pipe (252) is a double-skin pipe comprising an inner skin surrounded by an outer skin, and **in that** the detection means include a dihydrogen detector (450) disposed between the inner and outer skins of the main pipe (252).

8. Supply system (350) according to either one of claims 6 or 7, **characterised in that** the detection means include a dihydrogen detector (452) disposed in the box (402).

9. Supply system (350) according to any one of claims 6 to 8, **characterised in that** the box (402) is filled with an inert gas or under vacuum.

10. Aircraft (100) including first and second dihydrogen tanks (110a-b), at least one engine (106) and, for each engine (106), a supply system (250, 350) according to any one of the preceding claims, where each feed pipe (251a-b) is fluidically connected to the first or second tank (110a-b), and where the main pipe (252) is fluidically connected to the engine (106).
